# EUROPEAN PATENT APPLICATION

(11) **EP 1 351 172 A1**
(43) Date of publication of application: **08.10.2003**
(21) Application number: 01271597.5
(22) Date of filing: 17.12.2001
(51) Int. Cl.: G06F 17/60

(54) **METHOD AND APPARATUS FOR SUPPORTING APPAREL PRODUCT SALE AND FITTING ROOM**

(30) Priority: 19.12.2000 JP 2000386080
(71) Applicant: Shima Seiki Mfg., Ltd, Wakayama-shi, Wakayama 641-8511 (JP)
(72) Inventor: SHIMA, Masahiro, Wakayama-shi, Wakayama 640-8137 (JP)
(74) Representative: Beetz & Partner Patentanwälte
(86) International application number: JP0111073
(87) International publication number: WO02050736

(57) **Abstract**

When a customer (18) tries on an apparel product (11) in a fitting room (12), an image capturing apparatus (15) shoots an image of the customer (18) wearing the apparel product (11), and the image can be stored and processed by a processing apparatus (16) and be displayed for comparison on a display apparatus (17). The image shooting in the fitting room (12) can be carried out in a prescribed image shooting environment and in a stable illumination condition provided by an illumination apparatus (16), with a curtain (13) closed and the closed curtain (13) as the background. Since the curtain (13) spreads forward, the space usable as the fitting room (12) can be enlarged when in use. By applying image processing using the processing apparatus (16), an image of the customer (18) wearing an apparel product of a different color, for example, can be generated and displayed, without the customer (18) having to actually try it on.

## Description

### Technical Field

The present invention relates to an apparel product sales supporting method and apparatus and a fitting room that provide support when a customer or the like tries on clothes in a store where apparel products such as dresses and suits are sold.

### Background Art

In purchasing apparel products such as dresses and suits in a retail store and the like, it is usual that customers actually try them on. In a retail store such as a boutique or in a specialty shop in a department store or the like, a fitting room is installed, and is used when a customer tries on a garment to see whether the garment fits his/her size, is comfortable to wear, or becomes him/her. After trying on a few garments for comparison, the customer may find one that suits his/her taste. However, the customer has to make the comparison by relying on his/her memory. Since memory loses freshness as time elapses, if the number of garments tried on is large, the impression of earlier tried on garments may fade and the customer may end up being unable to satisfactorily compare them or may have to take the trouble to try them on once again.

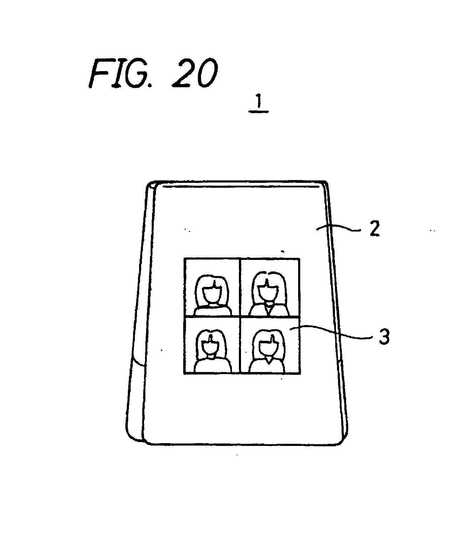

Fig. 20 shows an external view of a digital clothing fitting image display apparatus 1 as one example of a sales promotion tool sold to enhance the efficiency of clothing fitting. This digital clothing fitting image display apparatus 1 was introduced, for example, in articles in "Nihon Keizai Shimbun" dated February 1, 2000 and "Textile Journal" dated June 30, 2000, and is made public on the Internet at http://www.lil.co.jp/~protect/pd-110_spec.html. The digital clothing fitting image display apparatus 1 is constructed with a portable housing accommodating a CCD camera, and clothing fitting images captured by the CCD camera, for example, four images, can be displayed for comparison on a liquid crystal display screen 3.

The digital clothing fitting image display apparatus 1 can be used for sales promotion purposes, for example, in a clothing store. Using the digital clothing fitting image display apparatus 1, a customer who try on different garments can be captured by the CCD camera as digital images, and the sales clerk can give advice to the customer as to the purchase by displaying the plurality of clothing fitting images simultaneously for comparison. Since, using this apparatus, the customer can see what he/she looks like in different garments, for example, four garments at the same time, the apparatus is expected to offer the effect of helping the customer to decide on the spot the one that suits him/her. The apparatus is further equipped with a DVD playback function; therefore, when the apparatus is not being used for clothing fitting purposes, images recorded on a DVD can be played back in the store. The apparatus can also be used to print out captured images or as a database for customer management or the like by using a memory card, etc

The digital clothing fitting image display apparatus 1 has excellent portability; for example, since its major components are accommodated in the housing 2 as a single unit, the apparatus can be carried around in the store. When a customer tries on an apparel product, the customer wearing the product is shot by using the apparatus inside the fitting room or outside the fitting room. After that, while viewing the captured images for comparison in the fitting room or in some other suitable place, the customer takes advice from the sales clerk, etc. and decides on the product he/she wants to purchase.

Other prior art techniques relating to the sales support of apparel products, etc. include Japanese Unexamined Utility Model Publication JP-U 3-4746 (1991) and Japanese Unexamined Patent Publication JP-A 2000-92480 (2000), both involving the use of cameras for capturing images. In the prior art of JP-U 3-4746, a television camera is installed behind a one-way mirror so that a customer, while looking forward, can confirm through a camera apparatus what he/she looks like from the back, and the construction can thus be used advantageously for shooting images during dressing or shooting the appearance from the back. In particular, when installed in a store equipped with a fitting room, the apparatus is expected to provide great usefulness. The prior art of JP-A 2000-92480 concerns an image print supplying apparatus. Recent years have seen the development of image print supplying apparatuses capable of shooting the full length of the human body by using a camera apparatus equipped with a wide angle lens, but the captured image tends to look drawn out because of the characteristics of the wide angle lens; the prior art aims at solving this problem. Traditionally, it has only been possible to obtain unnatural images with the face and the upper part of the body greatly emphasized, though it has been practiced to correct image information by software. In the above-cited prior art, on the other hand, the subject is shot and the captured image displayed via a half-silvered mirror, so that the user as the subject can always determine the facial expression or the pose of his/her liking by viewing the screen. Since the camera apparatus can be turned and moved as desired, the optimum shooting point can be precisely adjusted. In particular, the full length of the subject can be easily shot. Also, since the shooting of the subject by the camera and the displaying of the captured image by the display are both done via the half-silvered mirror, the user as the subject can always determine the desired facial expression and the desired pose by monitoring the image of himself/herself on the screen.

Japanese Unexamined Patent Publication JP-A 5-266144 (1993) discloses a data processing system that performs, on behalf of humans, the analyses and judgments that require the variety of sophisticated sensitivities the human beings have. This data processing system comprises a computer, an evaluation target entry apparatus, an output apparatus, a storage device, and an input apparatus. In the computer, the entered evaluation target is divided into one or more constituent elements, the constituent elements are combined to synthesize an evaluation target which is output, the combination of the constituent elements in the output evaluation target is associated with evaluation information, the association relationship is classified to obtain an evaluation criterion, a newly input association relationship is compared with the evaluation criterion, and elements involved in a change of the combination are specified.

The system disclosed therein is an example implemented as a system for proposing recommended coordinates of women's dresses, but the system is not limited to this particular example. The sensitivity data processing system can also be applied widely to other kinds of products, such as furniture and audio products, that require sophisticated sensitivities when determining combinations. The system may also be applied widely to such service that provides meticulous coordinate information that is made to suit each individual person, or to a method of displaying products in a display apparatus which has important meaning when designing store layout, these being accomplished by considering as elements the shape and color of the face, hair style, presence or absence of a mustache or beard, bodily shape, etc. that constitute the features of the human's figure, or the color, shape, size, and other features of the display apparatus for displaying the products.

Japanese Unexamined Patent Publication JP-A 10-293529 (1998) discloses the prior art relating to a personal coordinate system that enables a customer to see an image of himself/herself wearing an apparel product without actually trying it on. The personal coordinate system comprises at least: apparel product information storing means in which information including images and sizes of apparel products is stored; customer information input means for inputting information including the customer's images and sizes; customer information storing means for storing the input information concerning the customer; apparel product selecting means for selecting an apparel product applicable to the customer by comparing apparel products with the customer's sizes; image combining means for combining the customer's image with the image of the apparel product selected by the apparel product selecting means; and display/output means for displaying/outputting the image produced by the image combining means together with the information concerning the apparel product.

The information to be input to the customer information input means includes, for example, the standardized size such as S, M, or L or the actually measured customer's sizes such as shoulder width, bust measurement, waist measurement, sitting height, inseam, hips, etc., the customer's tastes in color and style, a plurality of images of the customer photographed from prescribed angles, such as an image of a standing figure taken from the front, an image of a seated figure taken from the front, an image of a standing figure taken from a side, etc., and information concerning the customer's tastes in color and style. When the customer's sizes are input as actually measured values, it is preferable to convert the size to the standardized size such as S, M, or L for the selection of an apparel product. Such a personal coordinate system comprises, for example, a client computer as the input means equipped with an image scanner or the like and a server computer as the storing means.

Japanese Unexamined Patent Publication JP-A 2000-276656 (2000) discloses a product sales data processing system that enables a sales clerk to know information relating to a visiting customer on the spot. This system includes visiting customer information reading means installed at a distance from a product sales data processing apparatus, as well as visiting customer information storing and holding means and visiting customer information display means, and can read customer information from the customer card that a visiting customer carries without contacting the customer card directly, can store and hold the readout visiting customer information in the visiting customer information storing and holding means, and can display the thus stored and held visiting customer information on a display apparatus. Since the product sales data system is configured to be able to read customer information from the customer card that the visiting customer carries without contacting the customer card directly and to display the thus readout, stored, and held visiting customer information on the display apparatus, the clerk in charge of the product sales data processing apparatus can know on the spot the information relating to the visiting customer as well as the arrival of the customer. This not only helps to provide proper and active service to the customer, but also serves to induce the visiting customer to become a regular customer.

Japanese Unexamined Patent Publication JP-A 2000-246602 (2000) discloses the prior art relating to a material stock information management method and an apparatus that enables a garment designed to the specification determined by a customer to be ordered without fail regardless of variations in material stock. This prior art method accepts as an input a partial specification of the product and, based on the partial specification, sets the standard amount of material to be used for the production of the product. Based on the standard amount of material to be used, a first correction is applied to the material stock information. Next, detailed specification of the product is accepted as an input and, based on this detailed specification, the detailed amount of material to be used for the production of the product is determined. Based on this detailed amount of material to be used, the stock information is further corrected.

Paragraph [0004] in the above-cited Patent Publication carries the description to the effect that a method that determines the design of a garment and the specification of material, etc. while checking the finished condition of the garment by using an electronic catalog on a computer has been drawing attention in recent years. Previously, in the sale of half ready-made clothes or the like, it was difficult to predict the final finished condition when determining the design of the clothes and the specification of the material to be used, and there were cases where the finished product came out different than what the customer had visualized; on the other hand, by using an electronic catalog, the customer can order clothes, without any worry, after checking the final finished condition.

The subsequent paragraph [0005] carries the description to the effect that some electronic catalogs are constructed to store the latest stock amount of material in a database, with provisions made to disable the selection of any material not in stock and to give a warning for any material low in stock

The digital clothing fitting image display apparatus 1 shown in Fig. 20 has excellent portability and can capture images anytime and anywhere. However, because of its excellent portability, the image shooting place is not fixed and the image shooting environment may differ each time a clothing fitting image is shot. When a customer tries on a plurality of garments successively in a particular fitting room, since the space within the fitting room is usually kept to the minimum required, it is not possible, within the fitting room, to secure a sufficient distance from the CCD camera so that at least the upper part of the human body can be photographed. If the photographing is to be done outside the fitting room, it becomes difficult to keep the image shooting environment including the lighting condition constant, thus making it difficult to compare photographed colors, etc. under the same conditions. Furthermore, since the customer has to enter the fitting room to put on a garment and then come out of the fitting room each time the photographing is done, it becomes difficult to keep the position and posture of the customer constant with respect to the CCD camera, further making it difficult to compare under the same conditions the captured images of the plurality of garments tried on by the customer.

Further, since only the images of the garments actually tried on by the customer can be displayed on the liquid crystal display screen 3, the customer can only try on products that are actually available for fitting and, if the customer does not like the color of the garment, the chance of selling the garment will be lost even when it is possible to produce the garment of the coloring that matches the customer's taste.

The prior art disclosed in JP-U 3-4746 is only intended to enable the customer to check the back appearance when trying on clothes, and does not disclose or suggest anything about applications for displaying a plurality of clothing fitting images for comparison. Other prior art also does not disclose anything about applications for displaying a plurality of clothing fitting images for comparison.

An object of the present invention is to provide an apparel product sales supporting method and apparatus and a fitting room, wherein provisions are made so that proper advice, etc. can be given to a customer in the selection of an apparel product by producing stable clothing fitting images.

### Disclosure of Invention

The invention provides an apparel product sales supporting method comprising the steps of:
constructing a prescribed image shooting environment in an apparel product fitting room,
shooting a plurality of fitting states to capture images thereof,
storing the images of the plurality of fitting states respectively, and
displaying the images of the plurality of fitting states for comparison in order to select an apparel product.

According to the invention, apparel products are tried on in the fitting room a plurality of times, and each fitting state is shot to capture an image thereof which is then stored. Since the prescribed image shooting condition is constructed in the fitting room, the respective fitting states can be shot in the same shooting condition. Since the selection of an apparel product is made by displaying and comparing the images of the plurality of fitting states shot in the same shooting condition, the images of the fitting states can be evaluated under the same conditions; therefore, the customer, the person who actually tried on the products, can select the apparel product that he/she thinks best suits him/her, or the sales clerk, the person in charges of sales, can give proper advice to help the customer to make a decision.

In the invention, it is preferable that color-change image processing is applied to an apparel product carried in the images of the fitting states, and
an image of an apparel product of another color is also presented for selection by the image processing when displaying the images of the fitting states for comparison.

According to the invention, from the fitting state image captured by actually trying on the apparel product, a different colored apparel product actually not tried on can be generated by image processing, and the thus generated image can be presented for selection when displaying the images of the fitting states for comparison. Even when the number of apparel products to be tried on is reduced, a selection can be made from as wide a range of choices as when a sufficient number of products of different colors had been tried on.

In the invention, it is also preferable that an association between a state of a wearer and a matching color is preset for color coordination of the apparel product, and
the matching color specified based on the association is included in the colors to be used in the color-change image processing.

According to the invention, since the color specified based on the preassociated relationship between the state of the wearer and the matching color for the color coordination of the apparel product is included in the colors to be used in the color-change image processing, the color having a high probability of matching can be included for use in the different colored product to be displayed for comparison. In a retail store or the like, since an apparel product that the customer did not actually try on can also be recommended, the customer's interest in the product can be enhanced.

In the invention, it is also preferable that image processing for changing an apparel product design is applied to an apparel product carried in the images of the fitting states, and
an image of the apparel product whose design has been changed by the image processing is also presented for selection when displaying the images of the fitting states for comparison.

According to the invention, from the fitting state image captured by actually trying on the apparel product, an apparel product of a different design actually not tried on can be generated by image processing, and the thus generated image can be presented for selection when displaying the images of the fitting states for comparison. Even when the number of apparel products to be tried on is reduced, a selection can be made from as wide a range of choices as when a sufficient number of products of different designs had been tried on.

In the invention, it is preferable that the apparel product of the different design is selected by taking stock information into account.

According to the invention, since the apparel product of the different design to be presented for comparison is selected by taking the stock information into account, in a retail store or the like only apparel products that are currently in stock in the store can be selected and displayed for comparison.

In the invention, it is also preferable that image processing of adding to the image of each of the fitting states an image of an accessory that matches the apparel product is enabled, and
an image is displayed by superimposing the image of the matching accessory on the apparel product selected from the images of the fitting states.

According to the invention, by displaying the accessory that matches the apparel product selected by comparing the plurality of fitting states, extensive sales support can be provided by arousing customer interest in the accessory as well as in the product.

In the invention, it is further preferable that image processing for changing the environment is applied to a background in the images of the fitting states, and
an image of the changed environment is displayed when displaying the images of the fitting states for comparison.

According to the invention, apparel products can be selected according to various environments. Even when the images are shot in the same fitting room, if the background is changed according to TPO which means time, place, and occasion, the fitting states can be compared by changing the atmosphere.

In the invention, it is also preferable that a database is created in which customer information for a plurality of customers who tried on the apparel products is prestored, and
a history relating to the trying on is included in the database.

According to the invention, since the history relating to the trying on is included in the database in which the customer information is accumulated, for a customer who has tried on products a plurality of times a product highly likely to match the customer's taste can be displayed for selection by referring to the history.

In the invention, it is further preferable that the database is created so as to link with ID information recorded on an ID card that the customer carries, and
the customer information accumulated for the customer is made available for use by reading the ID information from the ID card of the customer.

According to the invention, since the customer information is accumulated in the database that links with the ID information recorded on the ID card, if the customer is carrying the ID card, the trying on of products can be efficiently carried out based on the accumulated information, and apparel products that can satisfy the customer can thus be recommended to the customer.

In the invention, it is also preferable that the customer information includes an image of the face of the customer which is obtained from the image shot in the fitting room, and
a sales clerk is trained to learn an association with the customer information by displaying the image of the face.

According to the invention, the sales clerk is trained to learn the association between the customer's face and the customer information after the store is closed or when there are few visiting customers during the business hours; then, when the customer visits the store, if the sales clerk has never attended to the customer before, the sales clerk can recognize the face of the customer and can offer proper service based on the customer information.

In the invention, it is also preferable that measurements of the customer are taken from the images of the fitting states.

According to the invention, since the images of the fitting states are shot in the prescribed image shooting condition so that the plurality of fitting states can be compared under the same conditions, the resulting clothing fitting images are the same in scale; accordingly, the size, etc. of the apparel product that fits the customer can be determined accurately based on the measurements taken from the clothing fitting images, without directly touching the customer's body to take the measurements.

In the invention, it is also preferable that the prescribed image shooting condition is created with the curtain as a background by closing a curtain that can be opened and closed.

According to the invention, when the fitting room is closed with the curtain, the prescribed image shooting condition is created with the curtain as the background; accordingly, when the fitting states are shot in the fitting room, the resulting images can be compared under the same conditions, and a proper selection can thus be made.

In the invention, it is further preferable that the curtain can be deployed so as to spread out in such a manner that, when the curtain is closed, a wider floor space is made usable as the fitting room than the floor space occupied by the fitting room when the curtain is opened.

According to the invention, when the curtain is closed, the space usable as the fitting room is enlarged so that a sufficient shooting distance can be secured within the fitting room between the image capturing apparatus and the person trying on clothes. When the trying on of clothes is not being carried out, and the curtain is opened, since the floor space the fitting room occupies can be reduced, effective use can be made of the limited space within a retail store or the like.

The invention also provides an apparel product sales supporting apparatus comprising:
a fitting room in which an apparel product is tried on;
an illumination apparatus for illuminating the interior of the fitting room in a prescribed condition;
an image capturing apparatus for shooting the fitting state of the apparel product;
a background member for providing a background in a prescribed condition when the image capturing apparatus shoots the fitting state;
a processing apparatus capable of storing fitting images shot by the image capturing apparatus and of applying image processing to the stored images; and
a display apparatus for displaying the images output from the processing apparatus.

According to the invention, the customer tries on an apparel product in the fitting room and, while illuminating the fitting room in a prescribed condition by the illumination apparatus, the fitting state of the apparel product is shot by the image capturing apparatus with the background member providing the prescribed background; the image thus captured can be stored and processed in the processing apparatus and displayed on the display apparatus. If a plurality of apparel products are tried on, since the image shooting environment is maintained constant, the resulting images can be compared under the same conditions, and a proper selection can thus be made. By applying image processing in the processing apparatus, an apparel product not actually tried on can be presented for selection, and proper sales support can be provided while viewing the presented images.

In the invention, it is preferable that the background member is a curtain which is opened to open the fitting room and which is closed to secure a space within the fitting room shielded from outside,
the curtain is deployed in such a manner as to spread over a wider floor space than the floor space occupied by the fitting room when the curtain is opened, and
the image capturing apparatus is mounted on a wall side of the fitting room.

According to the invention, since the image capturing apparatus for shooting the fitting state is mounted on the wall side of the fitting room, and since the curtain as the background is deployed in such a manner as to spread out, a sufficient shooting distance can be secured between the image capturing apparatus and the person trying on clothes. When the curtain is opened, the floor space that the fitting room occupies is reduced; therefore, when the fitting room is not in use, the space over which the curtain is deployed can be effectively utilized for other purposes.

In the invention it is also preferable that the processing apparatus includes:
color specifying means for specifying a color in accordance with a standard color chart carrying a plurality of predefined colors printed thereon;
texture selecting means for making a selection so that a plurality of textures associated with the apparel product are formed from a material of the specified color; and
image processing means for displaying the fitting image of the tried on apparel product by providing the apparel product with the texture selected by the texture selecting means.

According to the invention, in the image processing performed in the processing apparatus, the color of the apparel product in the fitting state can be changed using the color specified from the standard color chart carrying the plurality of predefined colors printed thereon, and the apparel product can be shown with the texture selected from the plurality of textures.

In the invention, it is further preferable that the texture selecting means is capable of generating an image of the specified thread material with the color specified by the color specifying means in a preset mode, and
the image processing means is capable of printing out the image of the material generated by the texture selecting means.

According to the invention, when a color is specified by the color specifying means, the texture selecting means can print out the image of the material with the specified color. For the apparel product and material, the same color looks different, but the color of the material state can be easily confirmed using the printed out image of the material.

The invention further provides a fitting room for trying on an apparel product, comprising:
a curtain for opening and closing an entrance to the fitting room, the curtain, when closed, being deployed extending outwardly relative to a floor area that the fitting room occupies when the curtain is opened;
a mirror mounted on a wall surface opposite from the closed curtain;
an image capturing apparatus, mounted on the wall surface, for shooting the fitting state of the apparel product against the closed curtain; and
an illumination apparatus for illuminating the interior of the fitting room in a prescribed condition.

According to the invention, a fitting room for trying on an apparel product includes a mirror, an image capturing apparatus, and an illumination apparatus. The curtain opens and closes the entrance to the fitting room and, when opened, is deployed extending outwardly relative to the floor area that the fitting room occupies when the curtain is opened. When the fitting room is not being used, the floor area occupied by the fitting room not in use can be reduced by leaving the curtain open. When the curtain is closed to use the fitting room, the area made usable as the fitting room by closing the curtain can be enlarged. The interior of the fitting room is illuminated by the illumination apparatus, and the mirror and the image capturing apparatus are mounted on the wall surface. The person who tries on an apparel product can view himself/herself in the mirror to check the fitting state. Since the image capturing apparatus shoots the fitting state in a stable shooting environment in the fitting room closed with the curtain and illuminated in a prescribed condition by the illumination apparatus, a plurality of fitting states can be compared under the same conditions.

In the invention, it is preferable that a plurality of mirrors are arranged at different angles.

According to the invention, since the plurality of mirrors are arranged at different angles on the wall surfaces of the fitting room, the person trying on the apparel product can view himself/herself not only from a straight-on angle but also from other angles.

In the invention, it is also preferable that the mirror is a one-way mirror which is a reflecting mirror when looked from the front side thereof and a see-through glass when looked from the reverse side thereof, and
the image capturing apparatus is placed on the reverse side of the mirror.

According to the invention, the image of the wearer as the wearer views in the mirror can be shot by the image capturing apparatus.

### Brief Description of Drawings

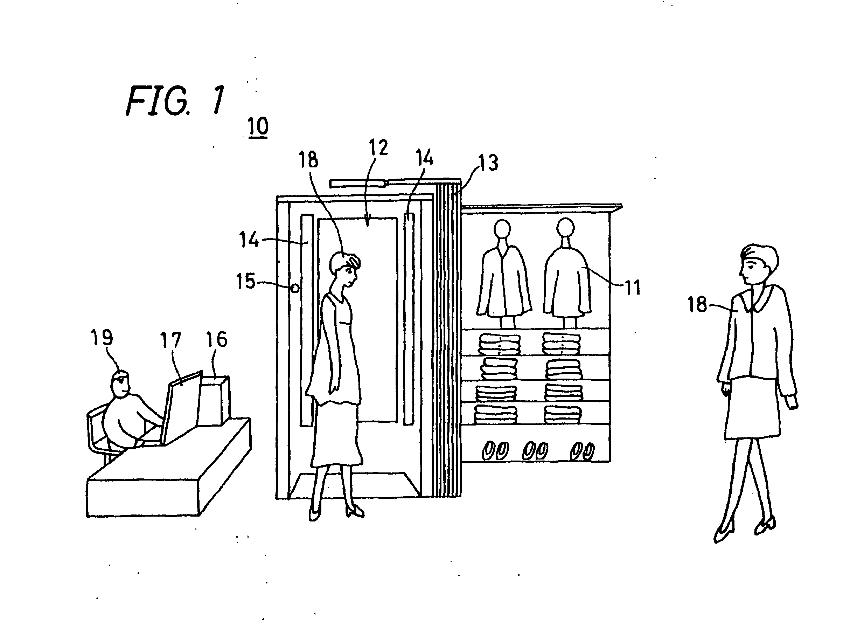

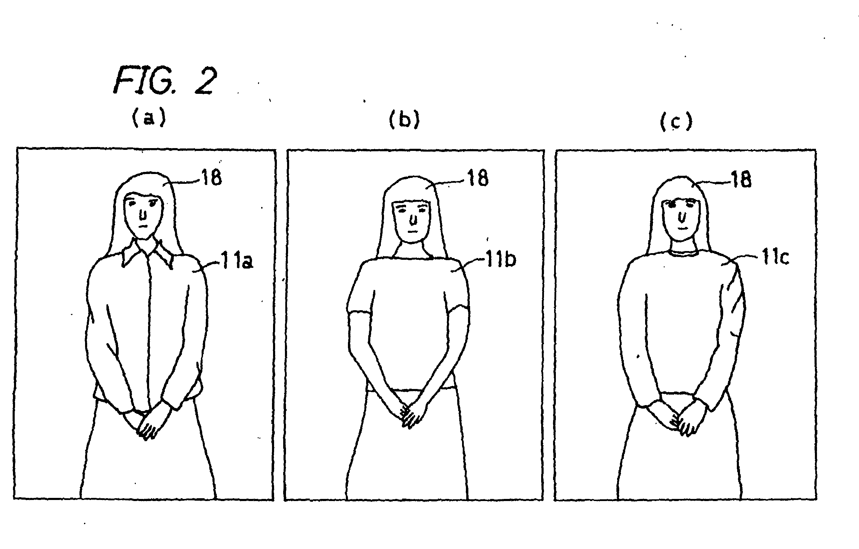

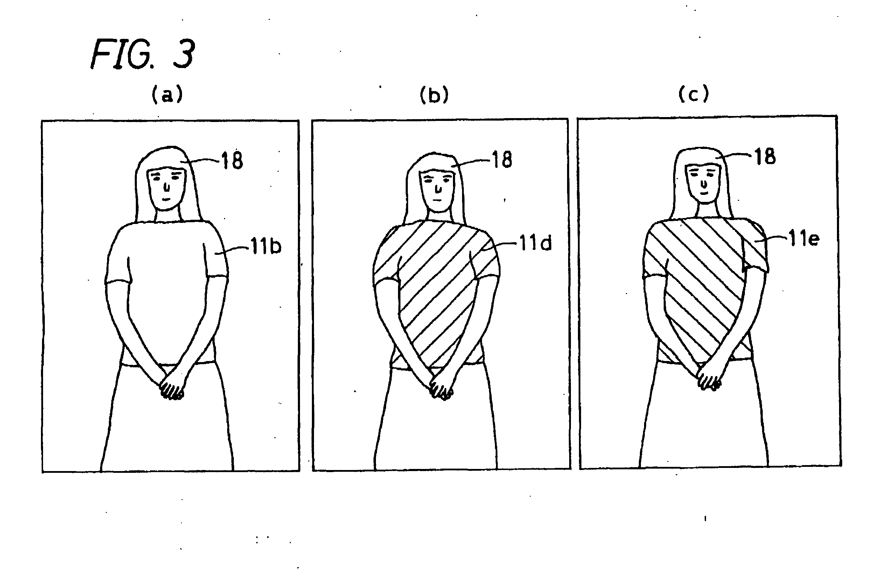

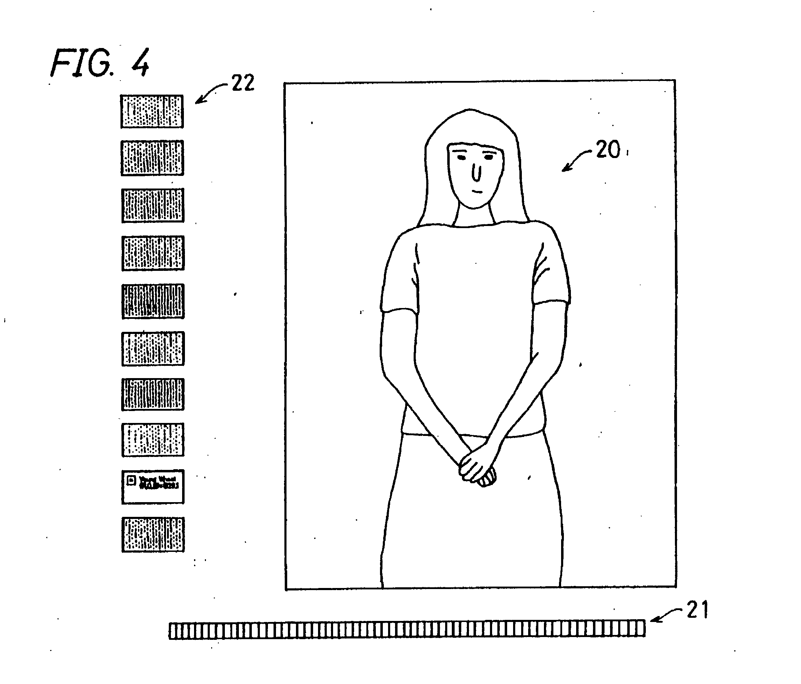

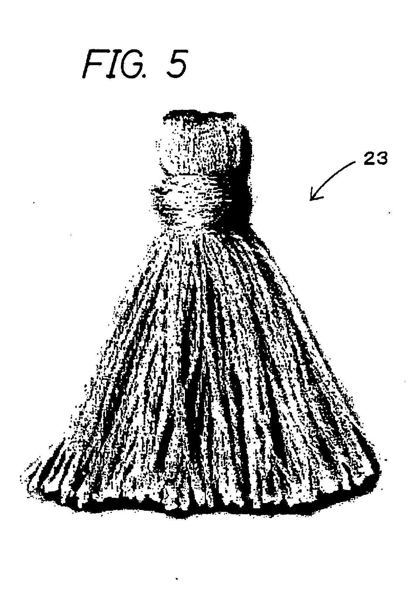

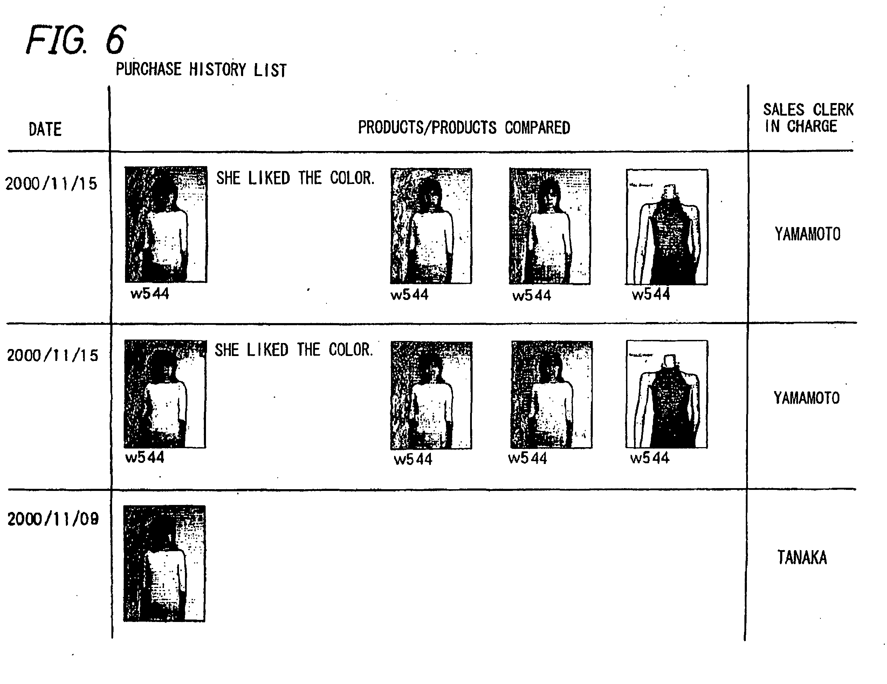

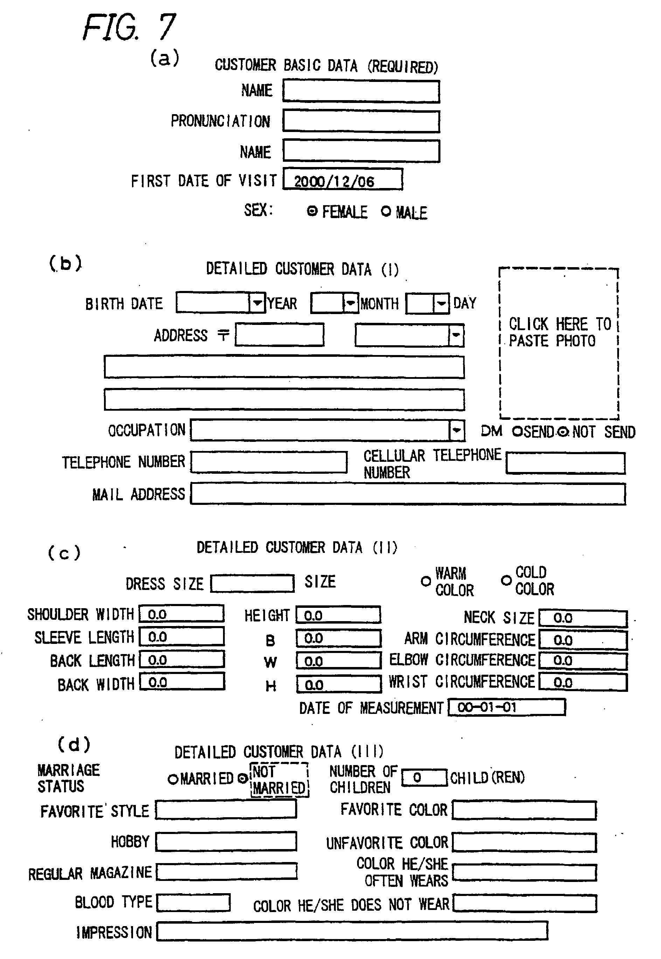

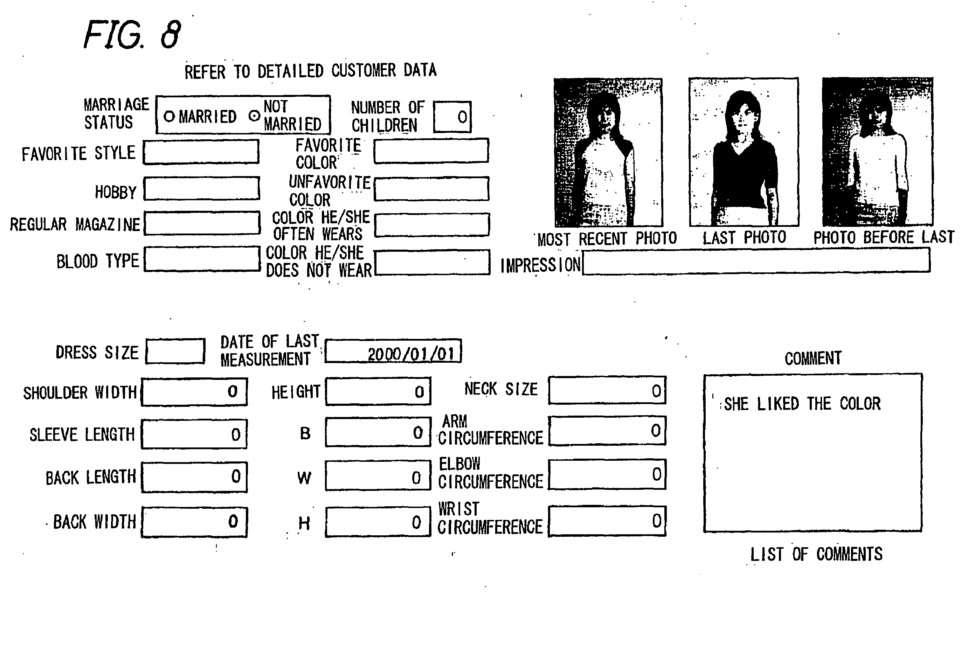

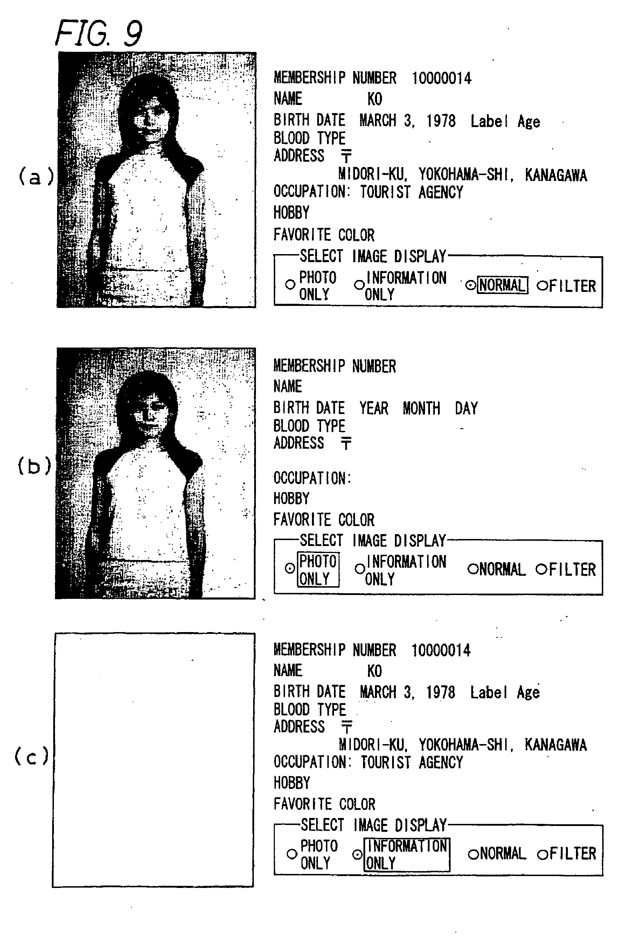

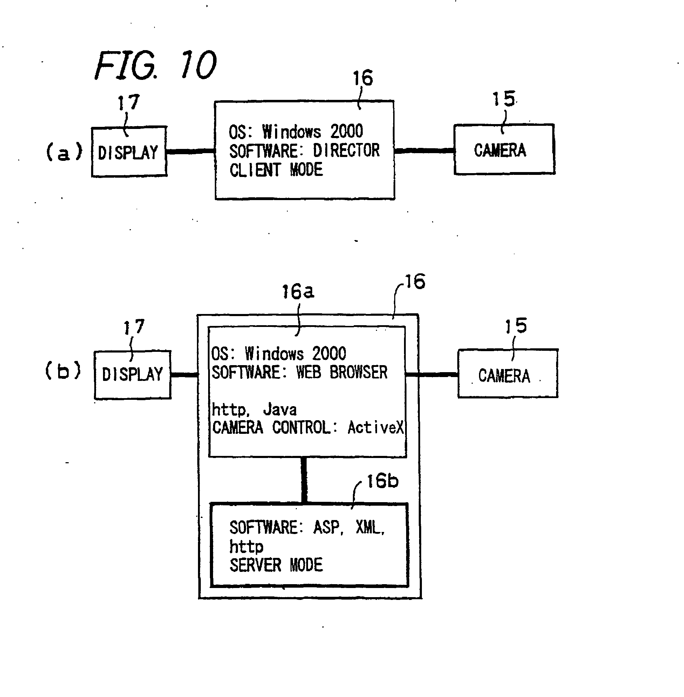

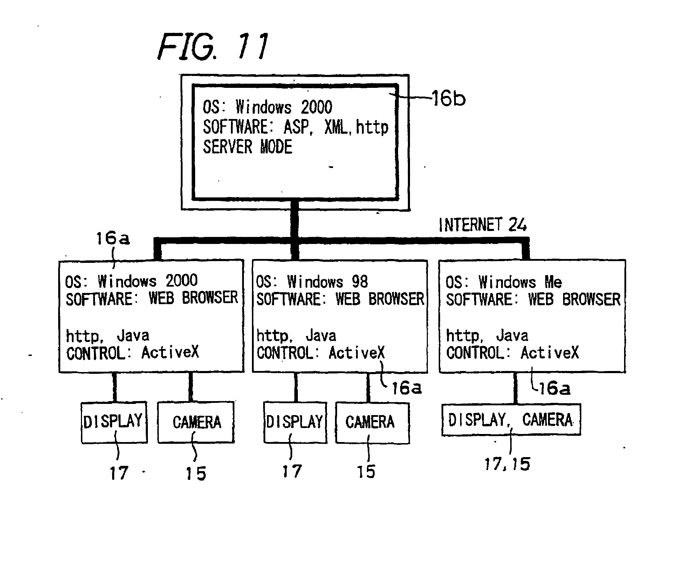

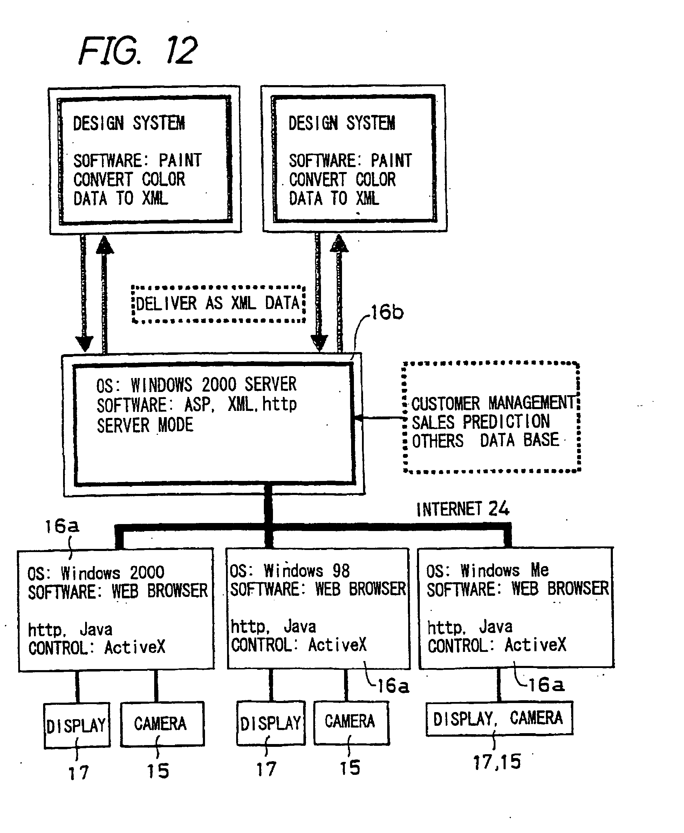

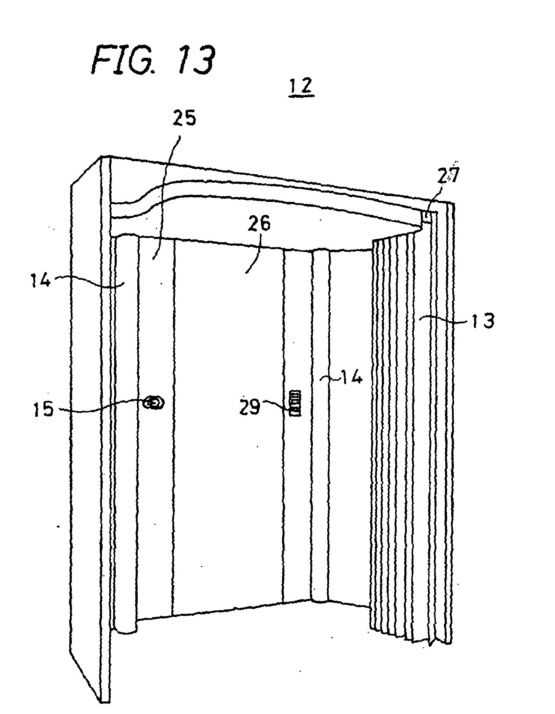

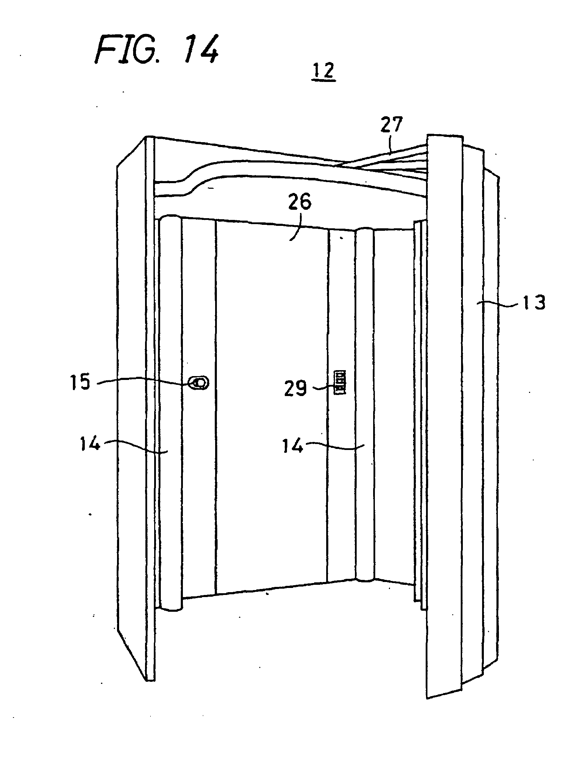

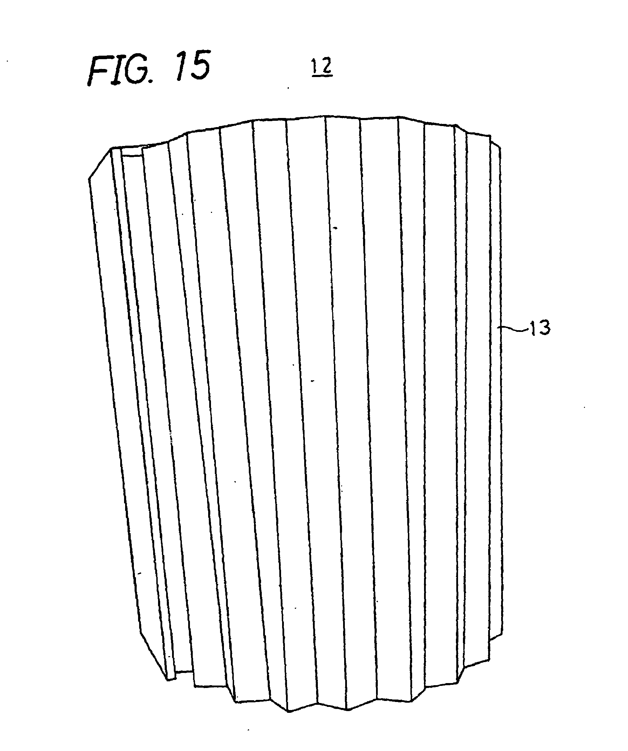

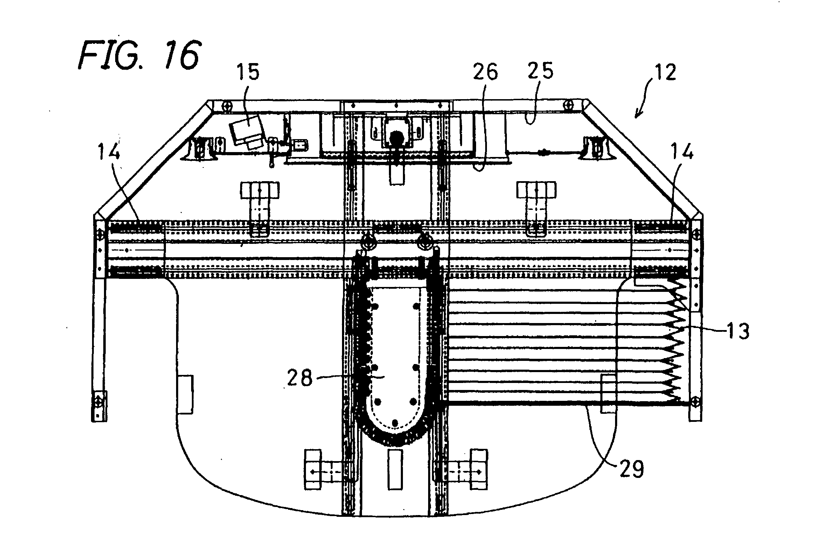

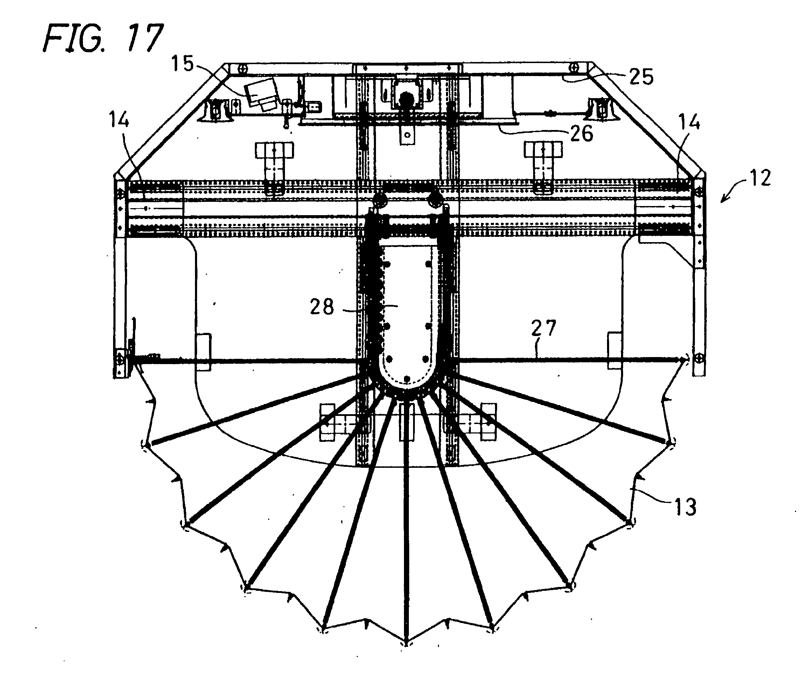

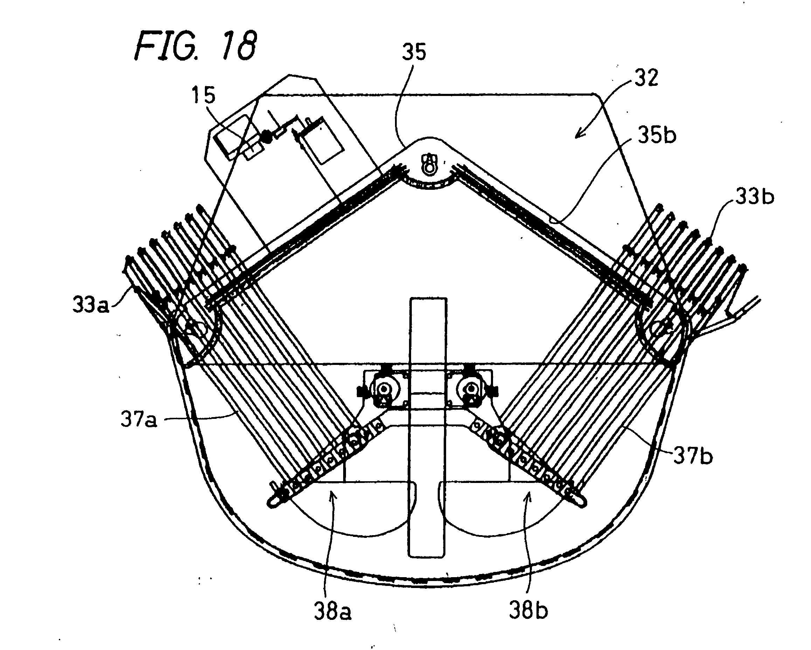

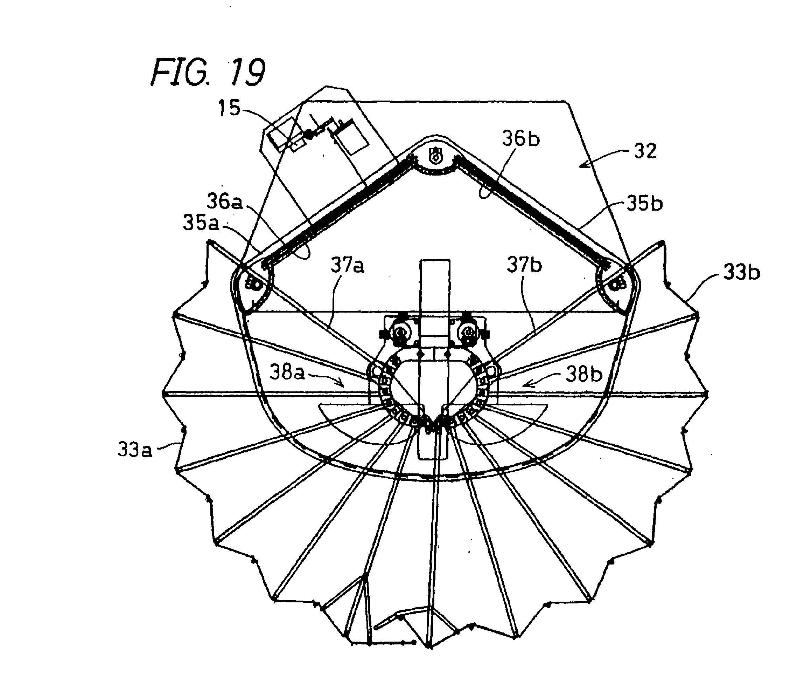

Fig. 1 is a schematic view showing an arrangement in a store equipped with an apparel product sales supporting apparatus 10 according to one embodiment of the invention. Fig. 2 is a view showing a plurality of clothing fitting results displayed for comparison on the screen of a display apparatus 17 in Fig. 1. Fig. 3 is a view showing a plurality of clothing fitting results with different colors, displayed for comparison on the screen of the display apparatus 17 in Fig. 1. Fig. 4 is a view showing how color processing is applied to a clothing fitting image by a processing apparatus 16 in Fig. 1. Fig. 5 is a view showing a thread material state which is output by specifying a color by the processing apparatus 16 in Fig. 1. Fig. 6 is a view showing an outline of a purchase history included in a database created by the processing apparatus 16 in Fig. 1. Fig. 7 is a view showing an input screen for collecting customer information to construct the database by the processing apparatus 16 in Fig. 1. Fig. 8 is a view showing detailed customer data created as the database by the processing apparatus 16 in Fig. 1. Fig. 9 is a view showing data that is extracted from the detailed customer data of Fig. 8, and that can be used for such purposes as sales clerk training. Fig. 10 is a block diagram showing one example of the system configuration of the processing apparatus 16 of Fig. 1. Fig. 11 is a block diagram showing another example of the system configuration of the processing apparatus 16 of Fig. 1. Fig. 12 is a block diagram showing still another example of the system configuration of the processing apparatus 16 of Fig. 1. Fig. 13 is a schematic front view showing the condition in which a curtain 13 is opened in a fitting room 12 shown in Fig. 1. Fig. 14 is a schematic front view showing the condition in which the curtain 13 is partially closed in the fitting room 12 of Fig. 1. Fig. 15 is a schematic front view showing the condition in which the curtain 13 is closed in the fitting room 12 of Fig. 1. Fig. 16 is a schematic cross sectional plan view showing the condition in which the curtain 13 is opened in the fitting room 12 of Fig. 1. Fig. 17 is a schematic cross sectional plan view of Fig. 1. Fig. 17 is a schematic cross sectional plan view showing the condition in which the curtain 13 is closed in the fitting room 12 of Fig. 1. Fig. 18 is a schematic cross sectional plan view showing the condition in which curtains 33a and 33b are opened in a fitting room 32 according to another embodiment of the invention. Fig. 19 is a schematic cross sectional plan view showing the condition in which the curtains 33a and 33b are closed in the fitting room 32 of Fig. 18. Fig. 20 is a perspective view showing the external construction of a digital clothing fitting image display apparatus according to the prior art.

### Best Mode for Carrying out the Invention

Fig. 1 shows an arrangement for supporting the sales of apparel products according to one embodiment of the present invention. An apparel product sales supporting apparatus 10 is installed in a retail store or the like that sells apparel products 11 such as dresses and suits, and includes a fitting room 12 for having customers try on the apparel products 11. A curtain 13 installed on the fitting room 12 is opened to open the fitting room 12, and is closed to secure a space in the fitting room 12 hidden from view from the outside. Inside the fitting room 12 are arranged an illumination apparatus 14, which provides illumination in a prescribed condition, and an image capturing apparatus 15, which shoots the fitting state of an apparel product 11 with the closed curtain 13 as the background. A processing apparatus 16 capable of storing and processing the images captured by the image capturing apparatus 15 and a display apparatus 17 for displaying images output from the processing apparatus 16 are located near the fitting room 12. A color CCD camera, for example, can be used as the image capturing apparatus 15. The processing apparatus 15 can be implemented, for example, by installing an application program on a personal computer. A liquid crystal display (LCD) or a cathode ray (CRT) display can be used as the display apparatus 17. The image capturing apparatus 15, the processing apparatus 16, the display apparatus 17, etc. are operated by store staff such as a sales clerk 19.

A customer 18 who visited the store tries on an apparel product 11 in the fitting room 12. In Fig. 1, the curtain 13 is shown opened for convenience of explanation, but the curtain 13 is closed when the customer actually tries on the product inside the fitting room 12. While illuminating the fitting room 12 in a prescribed condition by the illumination apparatus 14, the fitting state of the apparel product 12 is shot by the image capturing apparatus 15 with the closed curtain 13 as the background; the image thus captured can be stored and processed in the processing apparatus 16 and displayed on the display apparatus 17. Even when the customer tries on a plurality of products, since the image shooting environment is maintained constant, the resulting images can be compared under the same conditions, and a proper selection can thus be made. Further, by applying image processing in the processing apparatus 16, an apparel product not actually tried on can be presented for selection, and the sales clerk 19 or some other person can give proper advice to the customer 18 while viewing the images produced on the display apparatus 17; in this way, effective sales support can be provided that leads to the sale of the apparel product 11.

Fig. 2 shows a plurality of clothing fitting images displayed for comparison on the display apparatus 17 in Fig. 1. Parts (a), (b), and (c) of Fig. 2 show, for example, the same customer 18 wearing different apparel products 11a 11b, and 11c, respectively. A prescribed image shooting environment is constructed within the fitting room 12, and a plurality of clothing fitting states are shot by the image capturing apparatus 15. Images of the plurality of clothing fitting states are stored in the processing apparatus 16, and are displayed for comparison on the display apparatus 17 so that the customer can select a desired one of the apparel products 11a 11b and 11c. The images can be displayed for comparison by switching from one image to the next, or the plurality of images can be displayed at once on the same screen. Since the selection is made by displaying and comparing the images of the plurality of clothing fitting states shot under the same image shooting conditions, the images of the different clothing fitting states can be evaluated under the same conditions, and thus the customer 18, the person who tried on the apparel products, can select the apparel product 11a 11b or 11c, that the customer thinks best suits herself, or the sales clerk 19 attending to the customer can give proper advice to help the customer make a judgment.

Fig. 3 shows an example in which color-change image processing is applied to an image of a clothing fitting state and the resulting images with different colors are displayed for comparison. Fig. 3(a) indicates the image of the customer wearing the apparel product 11b shown in Fig. 2(b), and Figs. 3(b) and 3(c) show the images of different colored apparel products 11d and 11e resulting from the color-change image processing applied by the processing apparatus 16. In this way, the images of the different colored apparel products 11d and 11e not actually tried on can be generated by image processing from the captured image of the actually tried on apparel product 11b, and the virtual apparel products 11d and 11e thus generated can be presented for display and selection. Even when the number of apparel products to be tried on is reduced, the customer can make a selection from a wide range of choices of different designs.

Fig. 4 shows how color coordination is applied, for example, to the virtual apparel product lie shown in Fig. 3(c) so that the product suits the customer 18 wearing it. A clothing fitting image 20 is displayed on the screen of the display apparatus 17 and, by using a pointing device, a color is selected from a color palette displayed below the clothing fitting image 20. A mouse or a tablet, for example, can be used as the pointing device which is the color specifying means. For the display apparatus 17, a touch panel may be used that not only produces a display but also allows an input of a position on the screen.

Provisions may be made to specify colors in accordance with a standard color chart carrying a plurality of predefined colors printed thereon. The standard color chart issued, for example, from Pantone, USA or Munsell, USA can be used. Generally, in a liquid crystal display such as the display apparatus 17, colors are produced for display by combining multiple gray level three primary colors of RGB. However, depending on such factors as the backlight color of the liquid crystal display and differences in the color filters used, the color specified by the same RGB values may look different if the display apparatus 17 used is different. If color matching is made between the colors displayed on the display apparatus 17 and the colors specified by the standard color chart in the apparel product sales supporting apparatus 10 as a whole, accurate judgments can be made on colors in conditions close to the actual apparel product.

In the present embodiment, a texture palette 22 is shown on one side of the clothing fitting image 20. The texture palette 22 shows a plurality of textures associated with the apparel product in such a way that the textures are formed from a specified color material. The textures are prepared by varying the material, such as knitting fabric or woven fabric, of the apparel product 11d and the thickness and composition of the yarn used. When textured, the same color looks different since fine shading, etc. are added. Selection of a texture from the texture palette 22 is made by using a pointing device as a texture selecting means. In the present embodiment, the texture palette 22 displays the texture with a color adjacent to the color specified from the color palette 21. In this way, the, monochromatic state of the color palette 21 can be compared with the state of the texture palette 22 in which the texture is reflected. By selecting one texture from the texture palette 22, the color of the apparel product 11d shown in the clothing fitting image 20 can be replaced by the selected color and texture.

More specifically, by clicking on a portion of the apparel product 11d in the clothing fitting image 20 by the pointing device such as the mouse, and then moving the pointing device to the color palette 21 to specify the color, the texture palette 22 based on the specified color can be displayed. The processing apparatus 16 as the image processing means displays the clothing fitting image 20 by replacing the texture of the virtually tried on apparel product 11d by the texture selected from the texture palette 22. In the image processing performed in the processing apparatus 16, the color of the apparel product 11d in the fitting state can be changed using the color specified from the standard color chart carrying the plurality of predefined colors printed thereon, and the apparel product 11d can be shown with the texture selected from the plurality of textures.

Fig. 5 shows an example of an image of the specified thread material textured with a specified color, generated when the material of the specified thread is also specified in advance by the processing apparatus 16 as the texture selecting means. The material of the thread is shown, for example, in the form of a bundle of thread 23, and the image can be printed out.

In the present embodiment, in the virtual trying on of a different colored product, the skin color and hair color of the customer 18 as the wearer and the color of the apparel product already tried on are associated in advance in matching relationship to the color of the apparel product to be tried on. In the color-change image processing performed by the processing apparatus 16, the matching color specified based on the preassociated relationship is included in the colors to be used in the image processing. Since the color specified based on the preassociated relationship between the state of the wearer and the matching thread for the color coordination of the apparel product is included in the colors to be used in the color-change image processing, the color having a high probability of matching can be included for use in the different colored product to be displayed for comparison. In a retail store or the like, since an apparel product that the customer did not actually try on can also be recommended, the customer's interest in the product can be enhanced.

The processing apparatus 16 can also apply image processing to the apparel product displayed as the clothing fitting image 20 to change it to an apparel product of a different design, and the apparel product of the different design thus generated can be displayed for comparison in a manner similar to Fig. 2, without having the customer actually try on the product. That is, an apparel product of a different design, which the customer did not actually try on, can be generated by image processing from the captured image of the actually tried on product, and the thus generated image can be presented for comparison and selection. In this way, even when the number of apparel products to be tried on is reduced, the customer can make a selection from as wide a range of choices as when the customer had tried on a sufficient number of products of different designs.

The apparel product of the different design can also be selected by taking stock information into account. If an apparel product that is not in stock is presented for selection, the product cannot be delivered on the spot even if the customer 18 likes it. When only apparel products that are in stock are presented for selection, if the customer likes one, not only can the product be sold on the spot, but the stock in the retail store can also be reduced.

The processing apparatus 16 can also perform image processing to add to the clothing fitting image 20 an image of an accessory or the like that matches the apparel product. By superimposing an image of the matching accessory on the image of the apparel product displayed on the display apparatus 17 for comparison and selection, extensive sales support can be provided by arousing the interest of the customer 18 in the accessory as well as in the product.

In Fig. 4, it is also possible to change the environment by applying such image processing that changes the color of the curtain 13 by clicking the pointing device on the curtain 13 serving as the background of the clothing fitting image 20, or that replaces the background image itself with a different image. By changing the display environment of the clothing fitting image 20, apparel products can be selected that match various environments. Even when the images are shot in the same fitting room, if the background is changed according to TPO which means time, place, and occasion, the fitting states can be compared by changing the atmosphere to various scenes such as an outdoor scene, a street scene, a social scene, etc.

Figs. 6 to 8 are views showing information relating to a customer information database created by the processing apparatus 16 in Fig. 1. Fig. 6 shows a purchase history list, Fig. 7 shows a customer information input form, and Fig. 8 shows detailed customer data. In the purchase history list shown in Fig. 6, history record data concerning the customer 18 who visited the store a plurality of times and tried on products are accumulated. Images of the apparel products actually purchased and the apparel products displayed for comparison are stored as image data, which can be retrieved for viewing, for example, when the customer 18 visits the store next time. If the sales clerk in charge leaves a comment, the comment can be used effectively by displaying it together with the image data. The customer data input form shown in Fig. 7 consists of a basic data section (a) and detailed data sections (b), (c), and (d). When the customer 18 visits the store for the first time, the basic data is entered in accordance with Fig. 7(a) and, if there is a change, the detailed data sections shown in Figs. 7(b), 7(c), and 7(d) are also filled out. The detailed customer data shown in Fig. 8 is created by combining the purchase history of the customer 18 with the customer data, and can be used effectively not only when the customer 18 visits the store but also when sending advertisements such as direct mail. More specifically, since the history relating to the trying on of clothes is included in the detailed customer data which constitutes the database for storing the customer information, products highly likely to match the customer's taste can be selected by referring to the history (and displayed for comparison to the customer 18 who has tried on products several times in the past. Further, a virtual image of the customer wearing a recommended apparel product can also be printed out and sent by direct mail to the customer 18.

The detailed customer data as the database shown in Fig. 8 is created so as to link with the ID information recorded on the ID card that the customer 18 carries. The ID card can be produced in the form of a magnetic card or an IC card by collecting the customer data when the customer 18 visits the store for the first time, and can record thereon the ID information for identifying the customer 18. By reading the ID information from the ID card of the customer 18, the information contained in the detailed customer data stored for the customer 18 is made available for use by the sales clerk 19, etc. Since the information concerning the customer 18 is stored in the database that links with the ID information recorded on the ID card, if the customer 18 is carrying the ID card, products recommended for the customer to try on can be efficiently selected based on the stored information, and apparel products that can satisfy the customer can thus be recommended.

Such an ID card system linked with the database can also be used effectively when the customer 18 selects the apparel products he/she would like to try on. Since the ID information can be automatically read from the ID card, the customer 18 can efficiently select products, if provisions are made so that, when the customer 18 visits the store and inserts his/her ID card in the terminal, the customer 18 is presented with information indicating the place in the store where the products that, based on his/her purchase history, are judged to be highly likely to be selected by the customer for trying on are displayed.

Fig. 9 illustrates the process in which the sales clerk 19 is trained to recognize the customer 18 by using the customer information generated by combining the clothing fitting image 20 shown in Fig. 4 with the detailed customer information show in Fig. 8. Part (a) of Fig. 9 shows the entire customer information, and part (b) shows only the image information, including the face, extracted from the information of (a), while part (c) shows only the personal information extracted from the information of (a). After the store is closed, or when there are few visiting customers during the business hours, training can be performed by displaying either one of the information (b) or (c) and making the sales clerk recall the other information; through such training, the sales clerk learns the association between the customer's face and personal information and, if the sales clerk 19 has never attended to the customer 18 before, the sales clerk can offer effective sales promotion service when the customer 18 comes to the store.

Since the images of the plurality of fitting states are shot in the prescribed image shooting condition so that the plurality of fitting states can be compared under the same conditions, the resulting clothing fitting images, such as the clothing fitting image 20 shown in Fig. 4, are the same in scale; accordingly, the size, etc. of the apparel product that fits the customer can be determined accurately based on the measurements taken from the clothing fitting image 20, without directly touching the customer's body to take the measurements.

Figs. 10 to 12 are views each showing a system configuration applicable to the processing apparatus 16. In Fig. 10, a client operation mode implementing a stand-alone system is shown in part (a), and a server operation mode is shown in part (b). Fig. 11 shows the configuration in which a plurality of clients share a server via the Internet. Fig. 12 shows a configuration similar to that of Fig. 11, except that the system is configured to operate in collaboration with an application program as a design system.

As shown in Fig. 10(a), when a personal computer on which an operating system (OS) such as "Windows 2000", a trade name of Microsoft Corporation, runs is used as the processing apparatus 16, and an application program such as "Director", a trade name of Macromedia, Inc., is run on it, then the system can be operated in a complete stand-alone client operation mode.

As shown in Fig. 10(b), a system considering versatility can be constructed by incorporating a server mode in the processing apparatus 16. The operation of the processing apparatus 16 can be considered by dividing the system between a client mode portion 16a and a server mode portion 16b. In the client mode portion 16a, a Web browser program is run on the OS and further, application programs that use the image capturing apparatus 15 such as a camera, the display apparatus 17, etc. are run on the Web browser. The client mode portion 16a and the server mode portion 16b are linked together by means of the http (hypertext transfer protocol) or the like, and the client mode operation can be set using Sun Microsystems' "Java" language, Microsoft Corporation's "Active X", etc. The server mode portion 16b is created using Microsoft Corporation's "ASP" or the like. For data transfers, Extensible Markup Language generally known as its acronym XML can also be used.

Fig. 11 shows the configuration in which the server mode portion 16b taken from the configuration of Fig. 10(b) is shared by a plurality of client mode portions 16a via the Internet 24. Even when the client mode portions 16a use different operating systems, the server can be shared among them using Web browsers that accommodate differences between different operating systems. As shown in Fig. 12, the server mode portion 16b can be configured to operate in collaboration with the design system, an application program different from the Web server, to perform color data conversion using XML.

In the configuration where the server is operated in collaboration with the design system, if a skilled person is designated as the operator of the design system, a virtual clothing fitting image can be created by combining the clothing fitting image 20 with an image of an apparel product of a different design. It is also possible to create a virtual clothing fitting environment by connecting to a personal computer or the like at the home of the customer 18 via the Internet 24 and by superimposing an image of an apparel product on an image sent from the customer 18.

Figs. 13 to 17 show the construction of the fitting room 12 according to the embodiment of Fig. 1. Fig. 13 shows the condition in which the curtain 13 is opened, Fig. 14 shows the condition in which the curtain 13 is partially closed, and Fig. 15 shows the condition in which the curtain 13 is closed, respectively. Fig. 16 is a top plan view showing the condition corresponding to Fig. 13 in which the curtain 13 is opened, and Fig. 17 is a top plan view showing the condition corresponding to Fig. 15 in which the curtain 13 is closed. The fitting room 12 can be shielded from the outside by a wall surface 25 and the curtain 13. On the wall surface 25 are arranged the illumination apparatus 14 such as a daylight fluorescent lamp and the image capturing apparatus 15 such as a CCD camera, as well as a mirror 26 as a full-length mirror in which a customer views himself/herself while trying on clothes.

The curtain 13, which is attached to the tip ends of a plurality of radially spreading rods 27, can be drawn to open and close the opening of the fitting room 12. As shown in Fig. 16, when the curtain 13 is opened, the curtain 13 is folded up with the rods 27 brought close together, and is thus retracted into one side of the opening of the fitting room 12. In this condition, the floor area occupied by the fitting room 12 is reduced. As shown in Fig. 17, when the curtain 13 is closed, the base ends of the rods 27 are guided by a guiding mechanism 28 in such a manner that the spacing spreads out at the tip ends. In this way, the space usable in the fitting room can be enlarged with the curtain 13 spreading out over an extended area. A driving motor is provided to move the rods 27, and the curtain 13 can be opened and closed by operating a switch 29 mounted on the wall surface 25 of the fitting room 12.

When the movable curtain 13 is closed, a prescribed image shooting environment with the curtain 13 serving as the background is created within the fitting room 12; therefore, by shooting clothing fitting states within the fitting room 12, and by displaying and comparing the images shot under the same conditions, a proper selection can be made. The curtain 13 can be deployed so as to spread out in such a manner that, when the curtain 13 is closed, a wider floor space is made usable as the fitting room 12 than the floor space occupied by the fitting room 12 when the curtain 13 is opened; accordingly, when the curtain 13 is closed, the space usable as the fitting room 12 becomes wider so that a sufficient shooting distance can be secured within the fitting room 12 between the image capturing apparatus 15 and the person trying on clothes. When the trying on of clothes is not being carried out, and the curtain 13 is opened, since the floor space the fitting room 12 occupies can be reduced, effective use can be made of the limited space within a retail store or the like. Since the image capturing apparatus 15 for shooting the clothing fitting image is mounted on the wall surface 25 of the fitting room 12, and the curtain 13 serving as the background is deployed so as to spread out, a sufficient image shooting distance can be secured between the image capturing apparatus 15 and the person trying on clothes.

Figs. 18 and 19 are top plan views showing the construction of a fitting room 32 according to another embodiment of the invention. Fig. 18 shows the condition in which curtains 33a and 33b are opened, and Fig. 19 shows the condition in which the curtains 33a and 33b are closed, respectively. In this embodiment, mirrors 36a and 36b are respectively arranged on two wall surfaces 35a and 35b formed at different angles. The curtains 33a and 33b are actually two split curtains 33a and 33b which are accommodated into the respective sides of the opening when opened. The curtains 33a and 33b are attached to the tip ends of rods 37a and 37b, respectively. The base ends of the rods 37a and 37b are guided by respective guiding mechanisms 38a and 38b so that, when opening, the curtains 33a and 33b can be folded up and, when closing, the curtains 33a and 33b can be drawn so as to spread outwardly relative to the opening. The one-piece curtain 13 shown in Figs. 13 to 17 can also be used here. Conversely, the split curtains 33a and 33b shown in this embodiment can also be used for the fitting room 12 shown in Figs. 13 to 17.

In the fitting room 32 of this embodiment, the two mirrors 36a and 36b are arranged at different angles on the respective wall surfaces 35a and 35b, but three or more mirrors may be arranged. Since the plurality of mirrors 36a and 36b are arranged at different angles, the person trying on clothes can view himself/herself not only from a straight-on angle but also from other angles.

Further, the mirror 26 shown in Figs. 13 to 17 and at least one of the mirrors 36a and 36b shown in Figs. 18 and 19 may be constructed from a one-way mirror which is a reflecting mirror when looked from the front side and a see-through glass when looked from the reverse side, and the image capturing apparatus 15 may be placed on the reverse side of the mirror. With this arrangement, the image of the wearer as viewed straight on can be shot without the wearer being aware of it. However, generally, it may be preferable to shoot the wearer from an oblique direction.

In the above embodiments, since the curtains 13, 33a, and 33b are attached to the tip ends of the respective rods 27, 37a, and 37b, the space occupied by the closed curtains 13, 33a, and 33b can be freed when the curtains are opened. A curtain that spreads outwardly could be achieved by using a curtain rail or the like, but in that case, the curtain rail would remain suspended in midair when the curtain was closed, which would be undesirable in a retail shop or the like.

The background against which a clothing fitting state is shot need only be constructed from a member that can be maintained in a constant condition, and a special-purpose background member may be used instead of the curtains 13, 33a, and 33b. A wall surface or the like can also be used as the background member. Each of the above embodiments can be used not only for shooting images of the customer 18 trying on apparel products, but also for comparing various designs when developing an apparel product or when predicting sales.

### Potential for Exploitation in Industry

According to the invention, a prescribed image shooting environment is constructed in an apparel product fitting room, apparel products are tried on in the fitting room a plurality of times, and each fitting state is shot to capture an image thereof which is then stored. Since the selection of an apparel product is made by displaying and comparing the images of the plurality of fitting states shot in the same shooting condition, the images are refined and the images can be evaluated by comparing them accurately. Based on the accurate comparisons, the person who actually tried on the products can select the apparel product that he/she thinks best suits him/her, or the person in charges of sales can give proper advice to help the customer to make a decision.

According to the invention, a different colored apparel product actually not tried on can presented for selection. This makes it possible to reduce the number of apparel products to be actually tried on; furthermore, for the color of the apparel product, a selection can be made from a wide range of choices.

According to the invention, since the color specified based on the preassociated relationship between the state of the wearer and the matching color is included for the color coordination of the apparel product, the color having a high probability of matching can be included for use in the different colored product to be displayed for comparison. In a retail store or the like, the customer's interest in the product can be enhanced by proposing the color that is highly likely to suit the customer but that the customer failed to notice.

According to the invention, an apparel product of a different design than the apparel product actually tried on can be presented for selection. Even when the number of apparel products to be tried on is reduced, a selection can be made from a wide range of choices of different designs.

According to the invention, the apparel product of the different design to be presented for comparison is selected by taking the stock information into account. In a retail store or the like, only apparel products that are currently in stock in the store can be selected and displayed for comparison; accordingly, if the customer likes one of them, the apparel product that the customer selects can be delivered to the customer on the spot, and the sales can thus be promoted so as to reduce the stock.

According to the invention, extensive sales support can be provided by arousing customer interest not only in the apparel product but also in the accessory or the like that matches it.

According to the invention, apparel products can be selected by assuming various environments.

According to the invention, as the number of times the customer visits the store increases, the history relating to the trying on is accumulated in the database, and when the customer visits the store, a product highly likely to match the customer's taste can be displayed for selection by referring to the history accumulated in the database.

According to the invention, the database in which the customer information is accumulated links with the ID information recorded on the ID card of the customer. If the customer is carrying the ID card, the database linked with the ID information can be easily searched and based on the accumulated information, the trying on of products can be efficiently carried out and apparel products that can satisfy the customer can thus be recommended to the customer.

According to the invention, the sales clerk in a retail store or the like can be trained to learn the association between the customer's face and the customer information; as a result, when the customer visits the store, the sales clerk can recognize the face of the customer and can offer proper service based on the customer information.

According to the invention, since the fitting states are shot in the prescribed image shooting condition, the size, etc. of the apparel product that fits the customer can be determined accurately based on the measurements taken from the clothing fitting images, without directly touching the customer's body to take the measurements.

According to the invention, the curtain that closes the fitting room is used as the background for forming the prescribed image shooting environment; accordingly, the fitting states shot in the fitting room can be compared under the same conditions, and a proper selection can thus be made.

According to the invention, when the curtain is closed, the space of the fitting room is enlarged, and the fitting state can be shot by using the enlarged space. When the curtain is opened, since the floor space the fitting room occupies can be reduced, effective use can be made of the limited space within a retail store or the like.

According to the apparel product sales supporting apparatus of the invention, the background condition can be maintained constant when shooting the fitting state in the fitting room illuminated in a prescribed condition by the illumination apparatus. The processing apparatus is capable of storing and processing the image shot by the image capturing apparatus, and the resulting image is displayed on the display apparatus. When an apparel product is tried on in the fitting room, its fitting state is captured as an image which can be displayed on the display apparatus by applying image processing. If a plurality of apparel products are tried on, since the image shooting environment is maintained constant, the resulting images can be compared under the same conditions, and a proper selection can thus be made. By applying image processing, an apparel product not actually tried on can be presented for selection, and proper sales support can be provided while viewing the presented images.

According to the invention, when the curtain is closed, a stable image shooting environment can be formed by using the enlarged space of the fitting room. Since the image capturing apparatus for shooting the fitting state is mounted on the wall side of the fitting room, and since the curtain as the background is deployed in such a manner as to spread out, a sufficient shooting distance can be secured between the image capturing apparatus and the person trying on clothes. When the curtain is opened, since the floor space that the fitting room occupies is reduced, the space over which the curtain is deployed can be effectively utilized for other purposes.

According to the invention, the color of the apparel product in the fitting state can be changed using the color specified from the standard color chart carrying the plurality of predefined colors printed thereon, and the apparel product can be shown with the texture selected from the plurality of textures; accordingly, the apparel product of the different color can be compared in a colored condition close to the external appearance of the actual apparel product.

According to the invention, the image of the material can be printed out with the specified color and, using the printed out image of the material, the color of the material state can be easily confirmed.

According to the invention, when the fitting room for trying on an apparel product is not being used, the floor area occupied by the fitting room not in use can be reduced by leaving the curtain open. When the curtain is closed to use the fitting room, the area made usable as the fitting room by closing the curtain can be enlarged. In the fitting room, the person who tries on an apparel product can view himself/herself in the mirror to check the fitting state. Since the image capturing apparatus shoots the fitting state in a stable shooting environment illuminated in a prescribed condition, a plurality of fitting states can be compared under the same conditions.

According to the invention, using the plurality of mirrors arranged at different angles, the person trying on the apparel product can view himself/herself not only from a straight-on angle but also from other angles.

According to the invention, the image of the wearer looking in the mirror can be shot from the reverse side of the one-way mirror.

## Claims

1. An apparel product sales supporting method comprising the steps of:
constructing a prescribed image shooting environment in an apparel product fitting room,
shooting a plurality of fitting states to capture images thereof,
storing the images of the plurality of fitting states respectively, and
displaying the images of the plurality of fitting states for comparison in order to select an apparel product.

2. The apparel product sales supporting method of claim 1, wherein color-change image processing is applied to an apparel product carried in the images of the fitting states, and
an image of the apparel product whose design has been changed by the image processing is also presented for selection when displaying the images of the fitting states for comparison.

3. The apparel product sales supporting method of claim 2, wherein an association between the state of a wearer and a matching color is preset for color coordination of the apparel product, and
the matching color specified based on the association is included in the colors to be used in the color-change image processing

4. The apparel product sales supporting method of any one of claims 1 to 3, wherein image processing for changing an apparel product design is applied to an apparel product carried in the images of the fitting states, and
the apparel product whose design has been changed by the image processing is also presented for selection when displaying the images of the fitting states for comparison.

5. The apparel product sales supporting method of claim 4, wherein the apparel product of the changed design is selected by taking stock information into account.

6. The apparel product sales supporting method of any one of claims 1 to 5, wherein image processing is enabled that adds to the image of each of the fitting states an image of an accessory that matches the apparel product, and
an image is displayed by superimposing the image of the matching accessory on the apparel product selected from the images of the fitting states.

7. The apparel product sales supporting method, of any one of claims 1 to 6, wherein image processing for changing the environment is applied to a background in the images of the fitting states, and
an image of the changed environment is displayed when displaying the images of the fitting states for comparison.

8. The apparel product sales supporting method of any one of claims 1 to 7, wherein a database is created in which customer information for a plurality of customers who tried on the apparel products is prestored, and
a history relating to the trying on is included in the database.

9. The apparel product sales supporting method of claim 8, wherein the database is created so as to link with ID information recorded on an ID card that the customer carries, and
the customer information accumulated for the customer is made available for use by reading the ID information from the ID card of the customer.

10. The apparel product sales supporting method of claim 8 or 9, wherein the customer information includes an image of the face of the customer which is obtained from the image shot in the fitting room, and
a sales clerk is trained to learn an association with the customer information by displaying the image of the face.

11. The apparel product sales supporting method of any one of claims 8 to 10, wherein measurements of the customer are taken from the images of the fitting states.

12. The apparel product sales supporting method of any one of claims 1 to 11, wherein the prescribed image shooting condition is created with the curtain as a background by closing a curtain that can be opened and closed.

13. The apparel product sales supporting method of claim 12, wherein the curtain can be deployed so as to spread out in such a manner that, when the curtain is closed, a wider floor space is made usable as the fitting room than the floor space occupied by the fitting room when the curtain is opened.

14. An apparel product sales supporting apparatus comprising:
a fitting room in which an apparel product is tried on;
an illumination apparatus for illuminating the interior of the fitting room in a prescribed condition;
an image capturing apparatus for shooting the fitting state of the apparel product;
a background member for providing a background in a prescribed condition when the image capturing apparatus shoots the fitting state;
a processing apparatus capable of storing fitting images shot by the image capturing apparatus and of applying image processing to the stored images; and
a display apparatus for displaying the images output from the processing apparatus.

15. The apparel product sales supporting apparatus of claim 14, wherein the background member is a curtain which, when opened, opens the fitting room and, when closed, secures a space within the fitting room shielded from outside,
the curtain is deployed in such a manner as to spread over a wider floor space than the floor space occupied by the fitting room when the curtain is opened, and
the image capturing apparatus is mounted on a wall side of the fitting room.

16. The apparel product sales supporting apparatus'of claim 14 or 15, wherein the processing apparatus includes:
color specifying means for specifying a color in accordance with a standard color chart carrying a plurality of predefined colors printed thereon;
texture selecting means for making a selection so that a plurality of textures associated with the apparel product are formed from a material of the specified color; and
image processing means for displaying the fitting image of the tried on apparel product by providing the apparel product with the texture selected by the texture selecting means.

17. The apparel product sales supporting apparatus of claim 16, wherein the texture selecting means is capable of generating an image of the specified thread material with the color specified by the color specifying means in a preset mode, and
the image processing means is capable of printing out the image of the material generated by the texture selecting means.

18. A fitting room for trying on an apparel product, comprising:
a curtain for opening and closing an entrance to the fitting room, the curtain, when closed, being deployed extending outwardly relative to a floor area that the fitting room occupies when the curtain is opened;
a mirror mounted on a wall surface opposite from the closed curtain;
an image capturing apparatus, mounted on the wall surface, for shooting the fitting state of the apparel product against the closed curtain; and
an illumination apparatus for illuminating the interior of the fitting room in a prescribed condition.

19. The fitting room of claim 18, wherein a plurality of mirrors are arranged at different angles.

20. The fitting room of claim 18 or 19, wherein the mirror is a one-way mirror which is a reflecting mirror when looked from the front side thereof and a see-through glass when looked from the reverse side thereof, and
the image capturing apparatus is placed on the reverse side of the mirror.
